(19) Europäisches Patentamt
European Patent Office
Office européen des brevets

(11) **EP 4 166 260 A1**

(12) **EUROPEAN PATENT APPLICATION**

(43) Date of publication:
**19.04.2023 Bulletin 2023/16**

(21) Application number: **21382938.5**

(22) Date of filing: **18.10.2021**

(51) International Patent Classification (IPC):
**B22F 7/08** (2006.01)  **B22F 10/25** (2021.01)
**B22F 10/36** (2021.01)  **B22F 10/40** (2021.01)
**B22F 10/47** (2021.01)  **B23K 26/342** (2014.01)
**B33Y 10/00** (2015.01)

(52) Cooperative Patent Classification (CPC):
(C-Sets available)
**B22F 10/40; B22F 7/08; B22F 10/25; B22F 10/36;**
**B22F 10/47; B22F 12/41; B33Y 10/00;**
B22F 2207/17; B22F 2999/00  (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Fundacion Tecnalia Research and Innovation**
**20009 Donostia-San Sebastian (ES)**

(72) Inventors:
• **Ramiro Castro, Pedro**
  **Donostia-San Sebastián (ES)**
• **Galarraga Pinillos, Haize**
  **Donostia-San Sebastián (ES)**
• **Alberdi Gurrutxaga, Amaia**
  **Donostia-San Sebastián (ES)**
• **Ortiz Edes, Mikel**
  **Donostia-San Sebastián (ES)**

(74) Representative: **Balder IP Law, S.L.**
**Paseo de la Castellana 93**
**5ª planta**
**28046 Madrid (ES)**

(54) **AN ADDITIVE MANUFACTURING PROCESS COMPRISING DIRECTED-ENERGY DEPOSITION AND PRE-DEPOSITING INTERFACE METAL LAYERS**

(57)    A directed-energy deposition process to build a metal article (10), using directed-energy deposition of deposited layers (7) comprising feeding metal feedstock (3) into a focus (2b) of thermal energy (2a) onto an underlying target surface portion (5a) along a tool path, to create a layer (7) of deposited metal material, creating successive layers (7) of deposited metal material by vertically with respect to the deposition plane moving the deposition head (1) on each previous layer (7) of deposited metal material whereby at least one of a first density of the metal feed feedstock and a first specific thermal energy generated by the thermal source provides a specific consistency of each deposited layer and a specific bonding strength thereof to the underlying target surface. The process further comprises providing at least one interface metal layer (9) between an underlying target surface portion (5a) and a successive layer (7) of deposited metal material, by applying a reduced specific energy and an increased density of the metal feedstock (3), so that the metal material of the interface metal layer (9) does at the most only partially fuse with the surface portion (5a) of the substrate (5), to obtain bonding of a reduced strength between the metal interface metal layer (9) and the substrate (5), and to confer to the interface metal layer (9) a higher brittleness, and a decreased bonding to the underlying target surface (5a).

FIG. 7

**(Cont. next page)**

(52) Cooperative Patent Classification (CPC): (Cont.)

C-Sets
B22F 2999/00, B22F 12/41, B22F 2202/13

**Description**

## TECHNICAL FIELD OF THE INVENTION

The present invention relates to the technical field of additive manufacturing and, particularly to that of metal powder fed directed-energy deposition using laser power to melt the metal powder to deposit metal layers.

## PRIOR ART TO THE INVENTION

In powder-fed directed-energy deposition, a high-power laser is used to melt metal powder supplied or injected to the focus of the laser beam. The laser beam typically travels through the center of the deposition head and is focused to a small spot by one or more lenses. The build occurs on an X-Y table which is driven by a tool path created from a digital model to fabricate an object layer by layer. The deposition head is moved up vertically with respect to the deposition plane as each layer is completed. Metal powder is delivered and distributed around the circumference of the head or can be split by an internal manifold and delivered through nozzles arranged in various configurations around the deposition head. A hermetically sealed chamber filled with inert gas or a local inert shroud gas is often used to shield the melt pool from atmospheric oxygen for better control of material properties. Metal powder is applied only where material is being added to the part at that moment. The process supports a wide range of materials including titanium, steel, nickel alloys, cobalt alloys, aluminum, and other specialty materials as well as composites and functionally graded material. The process can build new metal parts or also add material to existing parts for example for coatings, repair, and hybrid manufacturing applications.

Process and product control is carried out in industry in a large number of cases by indirect measurement of variables of interest. This is due to that there are critical processes that are performed at locations that cannot be reached by transducers having complex geometries and low thermal tolerance, so that data processing, simulations and decision-making are constructed on the basis of indirect measurements which, however, imply limitations to the potential of industrial manufacture such as tools for metal transformation by deforming e.g. forging, stamping, tools for melting processes, undersea environments, extreme temperatures, etc.

Juhasz, M.; Tiedemann, R.; Dumstorff, G.; Walker, J.; Du Plessis, A.; Conner, B.; Lang, W.; MacDonald, E., Hybrid directed energy deposition for fabricating metal structures with embedded sensors. Additive Manufacturing 2020, 35, 101397, discloses a method for embedding sensors by directed-energy deposition using metal powder and laser. Low thermal energy and a slow deposition rate are applied to reduce thermal damage and an intermediate element is incorporated. A similar method is disclosed in Petrat, T.; Kersting, R.; Graf, B.; Rethmeier, M., Embedding electronics into additive manufactured components using laser metal deposition and selective laser melting, Procedia CIRP 74 (2018), pp. 168-171.

Siggard, E.J.; Madhusoodanan, A.S.; Stucker, B.; Eames, B., Structurally embedded electrical systems using ultrasonic consolidation (UC), Proceedings of the 17th Solid Freeform Fabrication Symposium (2006), pp. 14-16, discloses a method of Ultrasonic Consolidation (UC) for embedding sensors into aluminum at 300°F. The deposition surface must be flat so that this method is essentially applicable to very simple geometries and that is very complex applying it to already existing components and articles.

WO2020222875A1 discloses a method allowing the integration of sensors into flat surfaces by means of ultrasonic consolidation for monitoring other additive manufacturing processes.

Grandal, T.; Fraga, S.; Vazquez, J.A.; Zornoza, A., Technique for embedding fiber optics in metallic structures for smart material applications, 8th European Workshop On Structural Health Monitoring (EWSHM 2016), 5-8 July 2016, Spain, Bilbao, discloses a method of embedding metal-encapsulated fiber cables including a directed-energy deposition process by laser using wire employing high power of up to 2000W. The cables are bedewed with a melted material and coat the fiber laterally so that heat affecting the cable is transmitted by convection and conduction. This method centers on cables having a small diameter and not other geometries, and requires highly-fluid melted coats so that dilution increases with the substrate.

Printed object support structures are commonly used in additive technologies for powder bed fusion metals for both as support for connection to the deposition tray, aimed to allowing a later separation and transmission of heat produced during melting of the layers, and avoiding deformations and geometric distortions associated to complex structures such as internal cooling channels, supports at strongly inclined walls, overhanging sections, etc. These supports are usually hollow lattice or mesh structures to allow a later separation of the structure by machining and cannot be used in the same way in directed-energy deposition processes as in powder-bed manufacturing processes, so that the geometries of the more complex structures have to be redesigned within the geometric boundaries to allow depositing material and, as a consequence, only preforms with simplified geometries requiring more machining in order to obtain the final geometry of the structures.

US20170028651A1 discloses support structures for an additive manufacturing system by a method that comprises providing an interface material between the support body and an additively manufactured article. The method focuses and uses two types of materials and a thermal treatment including quick cooling to enable brittle fracturing of the interface material and thus easy separation of the manufactured article.

Marx, J.; Thiele, M.; Esen, C.; Ostendorf, A., Concept development for the generation of support structures in the laser metal deposition process. Procedia CIRP, 94, (2020) pp. 288-292, discloses a method for providing support structures by means of pillars made by a directed-energy deposition process, so as to obtain articles of complex structures.

As apparent, prior art techniques for embedding transducers and/or for providing support structure which apply powder-fed directed-energy deposition, have a number of drawbacks such as requiring interface metal layers of materials that different from the materials of the article to be manufactured and not being applicable at the same time to the manufacture of articles having complex geometries.

## DESCRIPTION OF THE INVENTION

The present invention intends to solve the problems inherent in prior art, by providing an additive manufacturing process to build a metal article according to a digital model, using directed-energy deposition of successively deposited layers of metal material previously molten by action of a focused thermal heat selected from high-power lasers, electron arrays and plasma. The process comprises

feeding metal feedstock selected from metal powder or metal wire, through a deposition head, into a focus of the thermal energy onto an underlying target surface portion of a substrate selected from metal base substrates, embedded -external elements, or an underlying layer of previously deposited metal material, to melt the feedstock at each moment to create successive molten metal melts pools where the molten metal fuses with the underlying target surface along a tool path, to create a layer of deposited metal material,

creating successive layers of deposited metal material by moving (vertically with respect to the deposition plane) the deposition head to a vertical distance from each previous layer of deposited metal material and feeding the metal feedstock to the deposition head to create a next layer of deposited metal material,

whereby at least one of a first density of the metal feedstock and a first specific thermal energy generated by the thermal source is applied to generate the melting pools, to provide a specific consistency of each deposited layer and a specific bonding strength thereof to the underlying target surface, and further

providing at least one interface metal layer between an underlying target surface portion and a successive layer of deposited metal material, by applying a reduced specific thermal energy generated by the thermal source when generating the interface metal layer from the feedstock and, optionally, an increased density of the metal feedstock, to provide thereby at each time successive melting pools in which the metal material of the metal layer interface does at the most only partially fuse with said underlying target surface portion of said substrate and the metal feedstock melts only partially, to obtain a bonding having a reduced bonding strength between the metal interface metal layer and the said underlying target surface portion of said substrate, and to confer to the interface metal layer a higher brittleness than those of the underlying target surface portion and that of the successive layer of deposited metal material, and a decreased bonding to the underlying target surface portion.

As the same metal material as that used to provide the layers of deposited metal material is also used to provide the interface metal layers and layers of deposited metal material, conventional equipment may be use to carry out the process of this invention by simply changing the specific thermal energy and the density of the metal feedstock, to provide both the layers of deposited metal material and the interface metal layers.

Further, in view that the metal material of the interface metal layer is at the most only partially fused with said underlying target surface portion of said substrate, a bonding having a reduced bonding strength between the metal interface metal layer and the said target surface portion of said substrate is obtained. Also, the fact that the interface metal layer has both higher porosity and lack of fusion, results in higher brittleness than those of the underlying target surface portion and that of the successive layer of deposited metal material, provide fracture areas which allow easy separation of the metal article from the substrate by having to apply little force. In addition, the more porous nature of the interface metal layers, combined with the lack of fusion with the underlying target surface, allows the interface metal layers to act as thermal barriers that protect embedded external elements against heat applied when the first and successive layers of deposited metal material are provided.

The reduced specific thermal energy applied to generate the interface metal layer may be in an energy range of 20% to 40% of the first specific energy provided to generate a successive layer of deposited metal material. The increased density provided to the metal feedstock when generating the interface metal layer may be within a density range from 50% to 250% higher than the first density of the feedstock provided to generate a layer of deposited metal material.

Preferably, the reduced specific thermal energy applied to generate the interface metal layer may be in an energy range of 25% to 35% of the first specific energy provided to generate a successive layer of deposited metal material. The increased density provided to the metal feedstock when generating the interface metal layer may be preferably within a density range from 100% to 200% higher than the first density of the feedstock provided to generate a layer of deposited metal material.

In a metal-powder direct-energy deposition process, the values of the specific energies and densities applied in the process of the present invention are determined by the following formulae:

### Equation 1

$$\text{Specific energy} \left( \frac{J}{mm^2} \right) = \frac{\text{Laser power (W)}}{\text{Laser spot diameter (mm) x feed rate (mm/s)}}$$

### Equation 2

$$\text{Density of metal feedstock} \left( \frac{g}{mm^2} \right) = \frac{\text{Powder/wire mass stream (g/s)}}{\text{Laser spot diameter (mm) x feed rate (mm/s)}}$$

Typical values of the specific energies and metal feedstock densities in the direct-energy (DED) process according to the present invention are stated in the following table:

| DED Process | Specific energy (J/mm$^2$) | Metal feedstock density (g/mm$^2$) |
|---|---|---|
| Standard metal layers | 250 to 40 | 0.02 to 0.0004 |
| Interface metal layers | 100 a 10 | 0.04 to 0.001 |

In some embodiments the specific energy can be from 75 to 15 J/mm$^2$.
In some embodiments the metal feedstock density can be from 0.025 to 0.005 g/mm$^2$.
The thickness of an interface metal layer may typically range from about 0.4 mm to about 2.2 mm. Where necessary, additional interface metal layers may be added.
In an embodiment of the invention, the substrate is a metal base substrate such as a metal base plate supports the layers of deposited metal material successively deposited to build the metal article.
In accordance with a first alternative of this embodiment, the process comprises

depositing the at least one interface metal layer on a surface of the metal base substrate, by applying a reduced specific energy generated by the thermal source which is lower than said first specific energy and delivering the metal feedstock into the focus of said thermal energy at a higher metal feedstock density than said first density, to provide successive melting pools in which the metal material of the interface layer does not fuse with said surface portion of said metal base substrate, to obtain welded bonding points having a reduced bonding strength between the metal interface metal layer and the said surface portion of said metal base substrate, depositing at least a successive layer of deposited metal material on the interface metal layer, by again applying the first specific energy and the first density of the metal feedstock.

In accordance with a second alternative of this embodiment, the process comprises

depositing, by applying the first specific energy generated by the thermal source and the first density of the metal feedstock, a bottom layer of deposited metal material and providing melting pools in which the metal feedstock fuses with the metal base substrate; depositing the at least one interface metal layer over the bottom layer of deposited metal material, by applying the reduced specific thermal energy generated by the thermal source and the increased density of the metal feedstock; depositing a successive layer of deposited metal material over the interface metal layer, by again applying the first specific energy and the first density of the metal feedstock

According to both alternatives, the interface metal layer is designed to act as a bottom fracture area for separating the metal article from the metal base substrate by applying only little force.
In another embodiment of the invention, the substrate comprises an external element such as a transducer or a fiber, which is to be embedded in the metal article, the external element having an upper portion and a lower portion, said lower portion being in contact with the substrate than can be a machined metal component or a additively deposited structure , the underlying target surface portion comprising the upper portion of the external element, the interface layer deposited surrounding the upper portion and an area of an uppermost successive layer of deposited metal material surrounding the interface layer.

In accordance with this another embodiment, the process comprises

depositing at least one interface metal layer on the contour of the upper portion of the external element as a protective coating followed by the deposition of

uppermost layers having been applied by providing the first specific density of the metal feed feedstock and the first specific thermal energy of the thermal source. The interface metal layer acts like a barrier that is partially re-melted by the melt pool generated by the uppermost layer avoiding that the molten metal melt pool reaches the external component, and consequently, avoiding any damage on the external component. After few layers deposited at standard conditions over both the external component and the substrate the external component is embedded on the substrate.

Since the lower specific energy employed, there is not damages in the external element when depositing the interface metal layer. In addition, the interface metal layer is designed to act as a thermal barrier protecting the external element against heat generating when the successive layers of deposited metal are applied. This is due to the only partially contact between the external component and the deposited material due to the few bonding points resulted depositing the interface metal. Thus, the heat transfer by conduction it is reduced.

Optionally, prior to providing the successive layer of deposited metal material on the interface metal layer, the interface metal layer is re-fused by means of the deposition head passing over the interface metal layer applying a re-fusing heat at a first specific energy in the same range than the standard additive process without feeding metal feedstock. The objective of the re-fusion is to create higher bonding of the interface layer with the external component when necessary, controlling the amount of material fused and the thermal damage on the external component.

In a further embodiment of the invention, the metal article comprises a support structure for the metal article as a part of the metal article built according to the digital model.

In accordance with this further embodiment, the process comprises building the support structure by providing a plurality of successive interface metal layers according to a pattern provided in the digital model of the metal article, so that fracture areas in the metal are created where the interface metal layers are in contact with the layers of deposited metal material.

Making the support structure of the plurality of interface metal layers is advantageous as, due to the more brittle nature of the interface metal layers, enables an easier removal of the support structure by machining when compared to support structures made by conventional direct energy deposition which do not include interface metal layer.

In a preferred embodiment the laser used is a high-power laser with a power greater than 1 KW. In alternative embodiments a laser with a power inferior to 1 Kw can be used.

## BRIEF DESCRIPTION OF THE DRAWINGS

Embodiments of the invention will hereafter be described on the grounds of the appended drawings in which

figure 1 is a schematic sectioned side view of a conventional metal-powder deposition head used in the process of the present invention,
figure 2 is a schematic front sectional view showing a first situation in the deposition of a layer of deposited material,
figure 2A schematically shows the layer of deposited material in the situation shown in figure 2,
figure 3 is a schematic front sectional view showing a second situation in the deposition of a layer of deposited material,
figure 3A schematically shows the layer of deposited material in the situation shown in figure 3,
figure 4 is a schematic front sectional view showing a third situation in the deposition of a layer of deposited material,
figure 4A schematically shows the layer of deposited material in the situation shown in figure 4,
figure 5A is a schematic of a first stage of an embodiment of the process of the invention,
figure 5B is a schematic of a second stage of an embodiment of the process of the invention,
figure 5C is a schematic of a third stage of an embodiment of the process of the invention,
figure 6 is a photograph of a transverse section of an interface layer obtained according to an embodiment of the process of the invention,
figure 7 is a photograph of a transverse section of a metal article comprising interface metal layers obtained according to another embodiment of the process of the invention,
figure 8 is a photograph of a cross section of a metal article including a support structure made of interface layers obtained according to another embodiment of the process of the invention.

The reference signs appearing in these figures identify the following elements:

1 deposition head
1a center channel
1b outer ring channel
2 high-power laser source
2a laser beam
2b focus
3 metal powder
4 Carrier gas stream
5 metal base substrate
5a target surface portion
5b surface
5c heated substrate area
6 shielding gas
7 layer of deposited metal material
8 melting pool
9 interface layer
10 metal article
11 external element
12 support structure

## EMBODIMENTS OF THE INVENTION

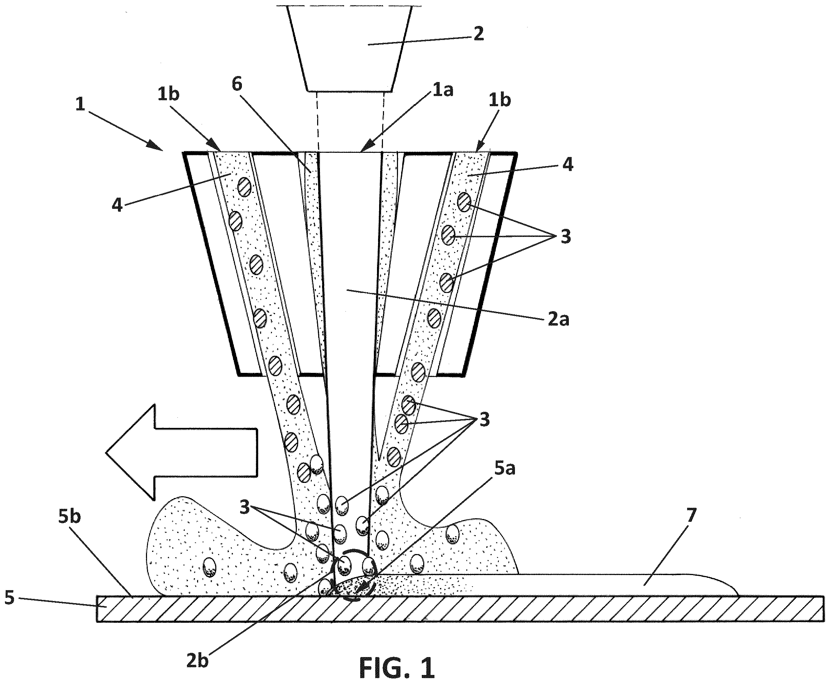

Figure 1 shows a conventional metal-powder deposition head -1-, used in the directed-energy deposition process of the present invention, for building a metal article according to a digital model. The deposition head -1- comprises a center channel -1a- and an outer ring channel -1b-. A laser beam -2a- generated by a high-power laser source -2- travels through the center channel -1a- and is focused at a focus -2b- located at a target surface portion -5a- of the upper surface -5b- of a metal base substrate -5-. A stream of inert shielding gas -6- is guided through the center channel -1a- to the focus -2b- at the target surface portion -5a-. A stream of inert carrier gas -4- is guided through the outer ring channel -1 b- to the focus -2b- at the target surface portion -5a-. Particles of metal powder -3- fed into the stream of inert carrier gas -4- is also guided to the focus -2b- such that the metal powder -3- melts at the focus -2b- forming a melting pool where the molten metal bonds with the underlying target metal surface -5a- to create a layer of deposited metal material -7- adhered to the target metal surface -5a- of the metal base substrate - 5-.

To build a metal article according to a digital model, using the deposition head in a process of directed-energy deposition of successively deposited layers of metal material previously molten by action of focused thermal energy (2a) generated by a high-power laser source (2) from high-power lasers, the process comprises

feeding metal feedstock (3) of metal powder employing carrier gas (4), into the focus (2b) of the thermal energy (2a) onto an underlying target surface portion of the metal base substrate (5), to melt the feedstock (3) at each moment to create successive molten metal melts pools where the molten metal fuses with the underlying target surface along a tool path, to create a layer (7) of deposited metal material,
creating successive layers (7) of deposited metal material by vertically moving the deposition head (1) to a vertical distance from each previous layer (7) of deposited metal material and feeding the metal feedstock (3) to the deposition head (1) to create a next layer (7) of deposited metal material,

A first density of the metal feedstock and a first specific thermal energy generated by the thermal source -2- to generate the melting pools is applied, to provide a specific consistency of each deposited layer and a specific bonding strength thereof to the underlying surface.

According to the invention, the deposition head -1- in the process of the invention, is further used to provide at least one interface metal layer between an underlying target surface portion and a successive layer -7- of deposited metal material, by applying a reduced specific energy generated by the thermal source -2- when generating the interface metal layer from the feedstock -3- and an increased density of the metal feedstock -3-, to provide thereby at each time successive melting pools in which the metal material of the interface metal layer does at the most only partially fuse with said target surface portion -5a- of the metal base substrate -5-, to obtain a bonding having a reduced bonding strength between the metal interface metal layer and the target surface portion -5a- of the substrate -5-, and to confer to the interface metal layer a higher porosity and brittleness than those of the underlying surface portion -5a- and that of the successive layer -7- of deposited metal material, and a decreased bonding to the underlying surface -5-due to the specific higher porosity and lack of fusion with the substrate obtained with the interface metal layer.

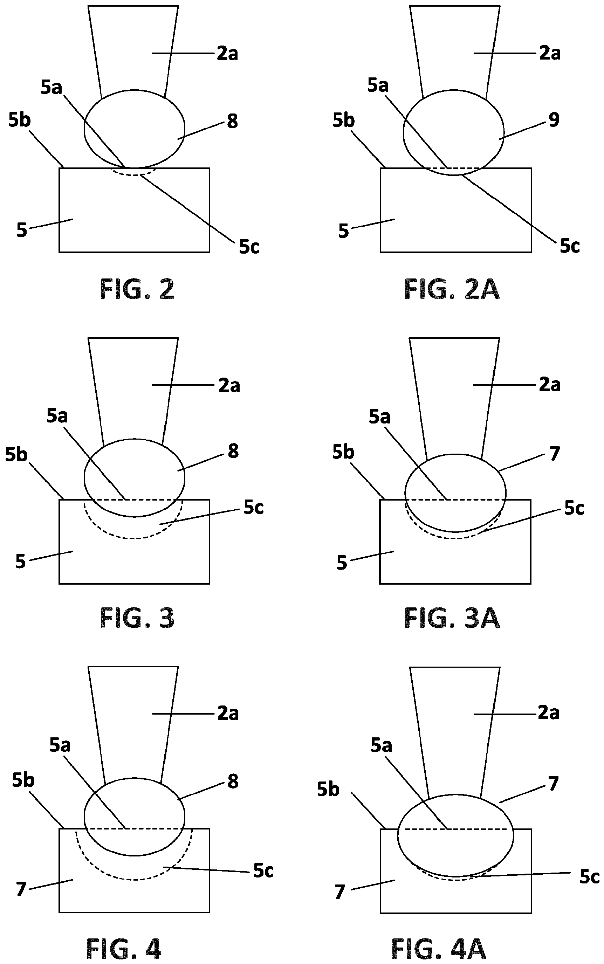

Figures 2, 3 and 4 show various situations which arise in respect of the target surface portion -5c- depending on the specific energy provided by the thermal energy -2a-reached in the melting pool -8- and the density of metal feedstock in the melting pool -8-

Figures 2 and 2A show a first situation where the heat provided by the thermal energy - 2a- in the focus of the laser beam is a reduced specific thermal energy to provide bonding of an interface metal layer -9- by welding to a metal base substrate -5-, in order to provide a fracture area enabling easy separation of a metal article from the metal base substrate -5-. As apparent, the heated area -5c- of the metal base substrate -5- at the target surface portion -5c- is small so that, at the most, only a small part of the metal of the metal base substrate -5- penetrates into the surface of the metal base substrate -5- and mixes and fuses with the molten metal powder of the interface metal layer -9- to provide welding spots for bonding the interface metal layer -9- to the metal base substrate -5-.

Figures 3 and 3A show a second situation where the heat provided by the thermal energy -2a- in the focus of the laser beam is a specific thermal energy to provide conventionally bonding of a layer -7- of deposited metal material to a metal base substrate -5- As apparent, the heated area -5c- of the metal base substrate -5- at the target surface portion -5c- is rather large so that a part of the metal of the metal base substrate -5-penetrates into the surface of the metal base substrate -5- and mixes and fuses with the molten metal powder of the layer -7- of deposited metal material to provides a strong bonding of the layer -7- of deposited metal material to the metal base substrate -5-. The strong bonding renders it difficult to separate an article from the metal base substrate - 5-.

Figures 4 and 4A show a third situation where the heat provided by the thermal energy - 2a- in the focus of the laser beam is a specific thermal energy to provide conventionally bonding of a layer -7- of deposited metal material to an underlying layer -7- of previously deposited metal material. As apparent, the heated area -5c- of the underlying layer -7-of deposited metal material at the target surface portion -5c- is rather large so that a part of the metal of the metal base substrate -5- penetrates into the surface of the underlying layer -7- of deposited metal material and mixes and fuses with the molten metal powder of the underlying layer -7- of deposited metal material to provides a strong bonding between the layers -7- of deposited metal material providing a strong consistence.

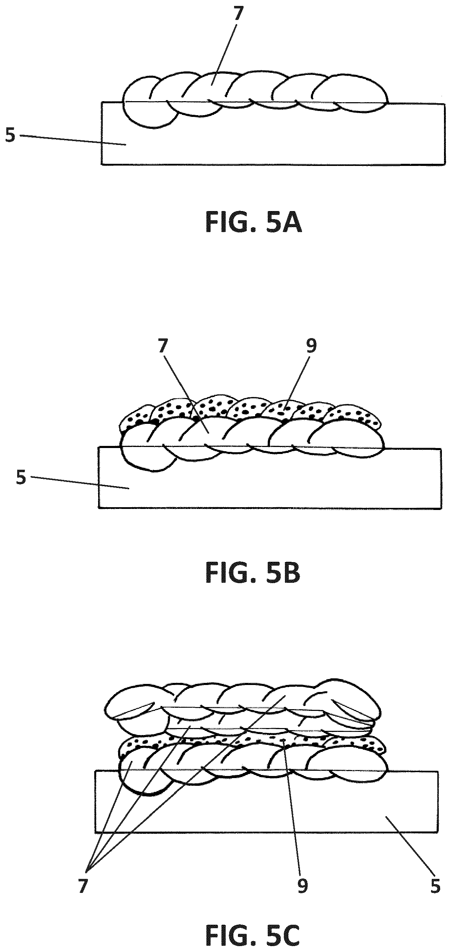

Figure 5A-5C show successive stages of an embodiment of the process according to the present invention where the substrate is a metal base substrate -5- is a metal base plate which supports the layers -7- of deposited metal material which are successively deposited to build the metal article -10-.

Figure 5A shows a first step of the process where, by applying the first specific energy generated by the thermal source -2- and the first density of the metal feedstock -3-, a bottom layer -7- of deposited metal material is deposited on the metal base substrate - 5-. Subsequently, as shown in figure 5B, an interface metal layer -9- on the bottom layer -7- of deposited metal material at a reduced specific energy, and an increased density of the metal feedstock. Thereafter, as shown in figure 5C, a first layer -7- of deposited metal material is provided on the interface metal layer -9-, by again applying the first specific energy generated by the thermal source -2- and the first density of the metal feedstock -3-. A successive layer -7- of deposited metal material is provided on the bottom layer -7- of deposited metal material. Thereby, the interface metal layer -9- may act as a bottom fracture area for separating the metal article -10- from the metal base substrate -5-.

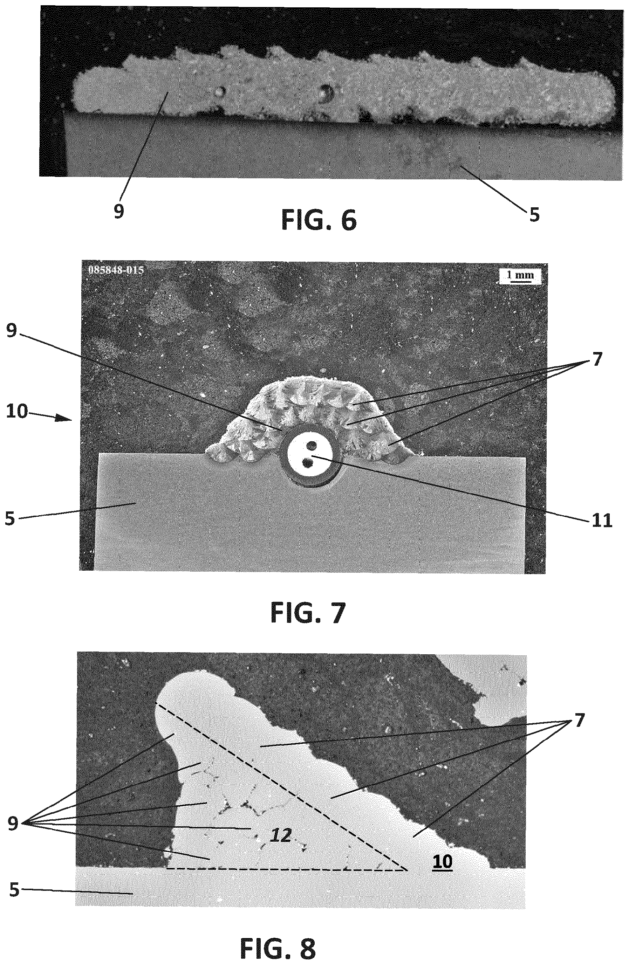

Figure 6 shows an interface metal layer -9- adhered to a metal base substrate -5- by using the process of the present invention. As apparent, the interface metal layer -9- has a rather high porosity, lack of fusion with the metal base substrate and cracks that are indicative of brittleness.

Figure 7 shows a part of a metal article -10- with an embedded transducer -11- having an upper portion and a lower portion. The lower portion of the transducer -11- is in contact with the machined substrate -5-. On the upper portion of the transducer -11- was deposited an interface metal layer -9-surrounding it and an uppermost layer -7- of deposited metal material surrounding the interface metal layer -9-,

There are two metal layers -7-. The interface metal layer -9- constitute a thermal barrier protecting the transducer -11- against heat originating when the successive layers -7- of deposited metal material are generated on the interface metal layers. The interface metal layer -9- has been partially remelted by the heat input of the successive layers -7- deposited.

Figure 8 shows part of a metal article (in this case an inclined wall) -10- comprising a support structure -12- for the metal article -10- as a portion of the metal article -10- built according to the digital model. The support structure -12- comprises a plurality of stacked interface metal layers -9- according to a pattern provided in the digital model of the metal article -10-, so that fracture areas in the metal article -10- are created where the interface metal layers -9- are in contact with the successive layers -7- of deposited metal material.

**Claims**

1. An additive manufacturing process to build a metal article (10) according to a digital model, using directed-energy deposition of successively deposited layers (7) of metal material previously molten by action of focused thermal energy (2a) generated by a thermal source (2) selected from high-power lasers, electron arrays and plasma, the process, the process comprising

   feeding metal feedstock (3) selected from metal powder and metal wire, to a deposition head (1), into a focus (2b) of the thermal energy (2a) onto an underlying target surface portion (5a) of a substrate selected from metal base substrates (5), embedded external elements (11), and an underlying layer (7, 9) of deposited metal material, to melt the feedstock (3) at each moment to create successive pools (8) of molten metal where the molten metal fuses with the underlying target surface portion (5a) along a tool path, to create a layer (7) of deposited metal material,
   creating successive layers (7) of deposited metal material by moving the deposition head (1) to a vertical distance from each previous layer (7) of deposited metal material and feeding the metal feedstock (3) to the deposition head (1) to create a next layer (7) of deposited metal material,
   whereby at least one of a first density of the metal feedstock and a first specific thermal energy generated by the thermal source to generate the melting pools is applied, to provide a specific consistency of each deposited layer and a specific bonding strength thereof to the underlying target surface, and further
   providing at least one interface metal layer (9) between an underlying target surface portion (5a) and a successive layer (7) of deposited metal material, by applying a reduced specific thermal energy generated by the thermal source (2) when generating the interface metal layer (9) from the feedstock (3) and, optionally, an increased density of the metal feedstock (3), to provide thereby at each time successive melting pools (8) in which the metal material of the interface metal layer (9) does at the most only partially fuse with said underlying target surface portion (5a) of said substrate (5), to obtain a bonding having a reduced bonding strength between the metal interface metal layer (9) and the said underlying target surface portion (5a) of said substrate (5), and to confer to the interface metal layer (9) a higher porosity and lack of fusion that results in brittleness than those of the underlying target surface portion (5a) and that of the successive layer (7) of deposited metal material, and a decreased bonding to the underlying target surface portion (5a).

2. The process according to claim 1, wherein the substrate is a metal base substrate (5), such as a metal base plate which supports the layers (7) of deposited metal material successively deposited to build the metal article (10), and wherein the process comprises

   depositing the at least one interface metal layer (9) on an surface of the metal base substrate (5), by applying a reduced specific thermal energy generated by the thermal source (2) which is lower than said first specific thermal energy and delivering into the focus (2b) of said thermal energy (2a) the metal feedstock (3) at a higher density than said first density of the metal feedstock, to provide successive melting pools (8) in which the metal material for the interface metal layer (9) does not fuse with said surface (5a) of said metal base substrate (5), to obtain welded bonding points having a reduced bonding strength between the interface metal layer (9) and the said surface portion (5a) of said metal base substrate (5),
   depositing at least one successive layer (7) of deposited metal material on the interface metal layer (9), by again applying the first specific thermal energy generated by the thermal source (2) and the first density of the metal feedstock (3),
   and wherein the interface metal layer (9) is designed to act as a bottom fracture area for separating the metal article (10) from the metal base substrate (5).

3. The process according to claim 1, wherein the substrate is a metal base substrate (5) such as a metal base plate which supports the layers (7) of deposited metal material which are successively deposited to build the metal article (10), and wherein the process comprises

   depositing, by applying the first specific thermal energy generated by the thermal source (2) and the first density of the metal feedstock (3), a bottom layer (7) of deposited metal material by providing successive melting pools (8) in which the metal feedstock (3) fuses with the metal base substrate (5);
   depositing the at least one interface metal layer (9) on the bottom layer (7) of deposited metal material, by applying the reduced specific thermal energy generated by the thermal source (2) and the increased density of the metal feedstock (3)
   depositing a successive layer (7) of deposited metal material on an uppermost interface metal layer (9), by again applying the first specific thermal energy generated by the thermal source (2) and the first density of the metal feedstock (3)
and wherein the interface metal layer (9) is designed to act as a bottom fracture area for separating the metal article (10) from the metal base substrate (5).

4. The process according to claim 1, wherein the substrate is an external element (11) such as a transducer or a fiber, which is to be embedded in the metal article (10), the external element (11) having an upper portion and a lower portion, said lower portion being in contact with the substrate (5) than can be a machined metal component or an additively deposited structure, the target surface (5a) comprising the upper portion of the external element (11), the interface layer (9) deposited surrounding the upper portion and an area of an uppermost successive layer (7) of deposited metal material surrounding the interface layer (9), and wherein the process comprises

    depositing the at least one interface metal layer (9) on the contour of the upper portion of the external element (11) by providing a higher density of the metal feed feedstock (3) and a reduced specific energy generated by the thermal source and
    depositing at least a successive layer (7) of deposited metal material by again applying the first specific energy and the first density of the metal feedstock (3),
    and wherein the interface metal layer (9) is designed to act as a thermal barrier that is partially re-melted by the melt pool generated by the at least one uppermost layer avoiding that the metal pool reaches the external component protecting the external element (11) against heat originating when the successive layers (7) of deposited metal material are generated.

5. The process according to 4, wherein, prior to providing the successive layer (7) of deposited metal material on the interface metal layer (9), the interface metal layer (9) is refused by means of the deposition head (1) passing over the interface metal layer (9) applying a refusing heat without feeding metal feedstock (3).

6. The process according to claim 1, wherein the metal article (10) comprises a support structure (12) for the metal article (10) as a portion of the metal article (10) built according to the digital model, and wherein the process comprises building the support structure (12) by providing a plurality of successive interface metal layers (9) according to a pattern provided in the digital model of the metal article (10), so that fracture areas in the metal article (10) are created where the interface metal layers (9) are in contact with the successive layers (7) of deposited metal material.

7. The process according to claim 6 comprising depositing the at least one bottom interface metal layer (7) on a surface of the metal base substrate (5) on which the metal article (10) is built,
and wherein the bottom interface metal layer (9) is designed to act as a bottom fracture area for separating the metal article (10) from the metal base substrate (5).

8. The process according to any of claims 1 to 7, wherein the metal feedstock (3) is metal powder.

9. The process according to any of claims 1 to 7, wherein the metal feedstock (3) is metal wire.

10. The process according to any of claims 1 to 9, wherein the reduced specific energy applied to generate the interface metal layer (9) is in an energy range of 20% to 40% of the first specific energy provided to generate the layer of deposited metal material.

11. The process according to any of claims 1 to 10, wherein the reduced specific energy applied to generate the interface metal layer (9) is in an energy range of 25% to 35% of the first specific energy provided to generate the layer of deposited metal material.

12. The process according to any of claims 1 to 11, wherein the increased density provided to the metal feedstock (3) when generating the interface metal layer (9) is within a density range of 50% to 250% higher than the first density of the feedstock (3) provided to generate the layer (7) of deposited metal material.

13. The process according to any of claims 1 to 12, wherein the increased density provided to the metal feedstock (3) when generating the interface metal layer (9) is within a density range of 100% to 200% higher than the first density of the feedstock (3) provided to generate the layer (7) of deposited metal material.

14. The process according to any of claims 1 to 13 wherein a laser with a power greater than 1 KW is used.

FIG. 1

**FIG. 2**

**FIG. 2A**

**FIG. 3**

**FIG. 3A**

**FIG. 4**

**FIG. 4A**

7

5

**FIG. 5A**

7          9

5

**FIG. 5B**

7          9          5

**FIG. 5C**

**FIG. 6**

**FIG. 7**

**FIG. 8**

**EP 4 166 260 A1**

## EUROPEAN SEARCH REPORT

Application Number

EP 21 38 2938

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIANG JINGCHAO ET AL: "A support interface method for easy part removal in directed energy deposition", MANUFACTURING LETTERS, vol. 20, 19 April 2019 (2019-04-19), pages 30-33, XP055904798, NL ISSN: 2213-8463, DOI: 10.1016/j.mfglet.2019.04.002 | 1-3,6-14 | INV. B22F7/08 B22F10/25 B22F10/36 B22F10/40 B22F10/47 B23K26/342 B33Y10/00 |
| Y | * Sections 2-4; page 30 - page 33 * * figures 1-4 * | 4,5 | |
| X | WO 2020/165530 A1 (SAFRAN [FR]; SAFRAN AIRCRAFT ENGINES [FR]) 20 August 2020 (2020-08-20) * paragraph [0017] - paragraph [0023] * * figures 1-3 * * claims 1-13 * | 1,6-11, 14 | |
| X | WO 2005/107981 A2 (OPTOMEC DESIGN [US]; BULLEN JAMES L [US]; KEICHER DAVID M [US]) 17 November 2005 (2005-11-17) * page 14 - page 15 * * claims 28-55 * | 1,6-11, 14 | TECHNICAL FIELDS SEARCHED (IPC) B22F B23K C22C B33Y |

-/--

The present search report has been drawn up for all claims

| Place of search | Date of completion of the search | Examiner |
|---|---|---|
| The Hague | 24 March 2022 | Neibecker, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 21 38 2938

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PETRAT TORSTEN ET AL: "Embedding electronics into additive manufactured components using laser metal deposition and selective laser melting", PROCEDIA CIRP, vol. 74, 1 January 2018 (2018-01-01), pages 168-171, XP055904810, NL ISSN: 2212-8271, DOI: 10.1016/j.procir.2018.08.071 | 1,8-11, 14 | |
| Y | * Sections 1-3; page 169 - page 171 * * figures 1-3 * * table 1 * | 4,5 | |
| Y | XIN BO ET AL: "Microstructure and mechanical properties of thin-wall structure by hybrid laser metal deposition and laser remelting process", OPTICS AND LASER TECHNOLOGY, ELSEVIER SCIENCE PUBLISHERS BV., AMSTERDAM, NL, vol. 127, 3 March 2020 (2020-03-03), XP086122357, ISSN: 0030-3992, DOI: 10.1016/J.OPTLASTEC.2020.106087 [retrieved on 2020-03-03] * abstract * | 5 | |

TECHNICAL FIELDS
SEARCHED (IPC)

The present search report has been drawn up for all claims

| Place of search | Date of completion of the search | Examiner |
|---|---|---|
| The Hague | 24 March 2022 | Neibecker, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 38 2938

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2022

| Patent document cited in search report | | Publication date | Patent family member(s) | | Publication date |
|---|---|---|---|---|---|
| WO 2020165530 | A1 | 20-08-2020 | CN 113438997 | A | 24-09-2021 |
| | | | EP 3924122 | A1 | 22-12-2021 |
| | | | WO 2020165530 | A1 | 20-08-2020 |
| WO 2005107981 | A2 | 17-11-2005 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020222875 A1

- US 20170028651 A1

**Non-patent literature cited in the description**

- **JUHASZ, M. ; TIEDEMANN, R. ; DUMSTORFF, G. ; WALKER, J. ; DU PLESSIS, A. ; CONNER, B. ; LANG, W. ; MACDONALD, E.** Hybrid directed energy deposition for fabricating metal structures with embedded sensors. *Additive Manufacturing,* 2020, vol. 35, 101397
- **PETRAT, T. ; KERSTING, R. ; GRAF, B. ; RETHMEIER, M.** Embedding electronics into additive manufactured components using laser metal deposition and selective laser melting. *Procedia CIRP,* 2018, vol. 74, 168-171

- **SIGGARD, E.J. ; MADHUSOODANAN, A.S. ; STUCKER, B. ; EAMES, B.** Structurally embedded electrical systems using ultrasonic consolidation (UC). *Proceedings of the 17th Solid Freeform Fabrication Symposium (2006),* 14-16
- **GRANDAL, T. ; FRAGA, S. ; VAZQUEZ, J.A. ; ZORNOZA, A.** Technique for embedding fiber optics in metallic structures for smart material applications. *8th European Workshop On Structural Health Monitoring (EWSHM 2016),* 05 July 2016
- **MARX, J. ; THIELE, M. ; ESEN, C. ; OSTENDORF, A.** Concept development for the generation of support structures in the laser metal deposition process. *Procedia CIRP,* 2020, vol. 94, 288-292